# EUROPÄISCHE PATENTSCHRIFT

(11) **EP 3 865 333 B1**
(45) Veröffentlichungstag und Bekanntmachung des Hinweises auf die Patenterteilung: **17.07.2024**
(21) Anmeldenummer: 20212548.0
(22) Anmeldetag: 08.12.2020
(51) Int. Cl.: B60L 3/00, B60L 3/04, B60L 53/16, B60L 53/31, H01H 3/02, H01H 3/54, H02H 1/00, H01H 71/00, H02J 7/00

(54) **VERSORGUNGSSTATION UND FUNKTIONSKONTROLLVERFAHREN HIERFÜR**
SUPPLY STATION AND FUNCTION CONTROL METHOD FOR SAME
STATION D'APPROVISIONNEMENT ET PROCÉDÉ DE CONTRÔLE FONCTIONNEL ASSOCIÉ

(30) Priorität: 11.02.2020 DE 102020103464; 11.03.2020 DE 102020106633
(43) Veröffentlichungstag der Anmeldung: 18.08.2021
(73) Patentinhaber: Compleo Charging Solutions GmbH & Co. KG, 58513 Lüdenscheid (DE)
(72) Erfinder: Dilgert, Simon, 44227 Dortmund (DE); Kachouh, Checrallah, 44227 Dortmund (DE)
(74) Vertreter: Wickord, Wiro

(56) Entgegenhaltungen:
- EP-A2- 2 487 063
- WO-A2-2011/147994
- WO-A2-2016/156567
- DE-A1- 102016 106 700
- DE-U1- 202012 102 992
- US-A1- 2018 175 563

## Beschreibung

Die Erfindung betrifft eine Versorgungsstation zum Bereitstellen elektrischer Energie für ein elektrisch betreibbares Fahrzeug nach dem Oberbegriff des Patentanspruchs 1.

Ferner betrifft die Erfindung ein Funktionskontrollverfahren für ein Fehlerstromschutzschaltelement einer Versorgungsstation.

Als elektrisch betreibbare Fahrzeuge im Sinne der Erfindung gelten insbesondere alle Automobile (PKW, LKW, Wohnmobile, Zweiräder, Busse, Transporter und andere), Schienenfahrzeuge (insbesondere Lokomotiven), Wasserfahrzeuge (Boote und Schiffe), Luftfahrzeuge sowie Anhänger (Wohnanhänger), mobile Verkaufsstände und andere. Die Versorgungsstation kann verwendet werden zum Bereitstellen von elektrischer Energie für Fahrzeuge mit und ohne eigenen Energiespeicher.

Eine Versorgungsstation im Sinne der Erfindung dient der Bereitstellung elektrischer Energie für elektrische Fahrzeuge im öffentlich zugänglichen oder privaten Bereich. Darüber hinaus kann vorgesehen sein, dass die Versorgungsstation genutzt wird, um im Rahmen eines übergeordneten Energie- und/oder Lastmanagements Energie aus dem Energiespeicher eines an die Versorgungsstation angeschlossenen elektrisch betreibbaren Fahrzeug in das Versorgungsnetz ein- beziehungsweise zurückzuspeisen. Auf diese Weise können Spitzenbedarfe abgedeckt und das Versorgungsnetz stabilisiert werden.

Handelsübliche Versorgungsstationen, welche im öffentlich zugänglichen Raum oder im privaten Umfeld der Bereitstellung von elektrischer Energie für ein elektrisch betreibbares Fahrzeug dienen, verfügen regelmäßig über ein Fehlerstromschutzschaltelement, welches die Bereitstellung elektrischer Energie im Fehlerfall selbsttätig unterbricht. Übliche Fehlerstromschutzschaltelemente sind beispielsweise als RCCB (Residual Current operated Circuit-Breaker), RCD (Residual Current Device) oder FI-Schalter allgemein bekannt. Sie überwachen die Fehlerströme und schalten bei einem gefährlich hohen Fehlerstrom gegen Erde die Spannung ab.

Das Fehlerstromschutzschaltelement ist üblicherweise von außen nicht zugänglich im Inneren des Gehäuses der Versorgungsstation angeordnet. Wenn das Fehlerstromschutzschaltelement auslöst beziehungsweise fällt, das heißt von der Überwachungsschaltstellung in die Unterbrechungsschaltstellung gelangt, muss ein Techniker herauskommen, das Gehäuse öffnen und die Versorgungsstation vor Ort wieder in Betrieb nehmen.

Eine gattungsgemäße Versorgungsstation ist aus der EP 2 487 063 A2 bekannt. Die Versorgungsstation sieht eine aktorische Betätigungseinrichtung vor, die nach einem Fehlerfall das Fehlerstromschutzschaltelement in die Überwachungsschaltstellung zurückverbringt. Voraussetzung hierfür ist, dass ein Gehäuse der Versorgungsstation geschlossen ausgebildet ist und das Anschlusselement unzugänglich hinter dem Verschlusselement angeordnet ist. Das Verschlusselement ist demzufolge in der Schließstellung vorgesehen, wenn das Fehlerstromschutzschaltelement zurückgestellt wird.

Aus der WO 2011/147994 A2 ist eine Versorgungsstation mit einem Anschlusselement bekannt, dem ein verstellbares Verschlusselement zugeordnet ist. Das Verschlusselement wirkt mechanisch mit einem Schutzorgan, beispielsweise einem Fehlerstromschutzschaltelement der Versorgungsstation zusammen und kann dieses beim Betätigen des Verschlusselements in die Überwachungsschaltstellung verbringen.

Aus der DE 20 2012 102 992 U1 ist eine Prüfroutine für eine Versorgungsstation bekannt, bei der für eine definierte Zeitdauer von beispielsweise fünf Minuten ein Prüfbetriebszustand aktiviert und eine Ladespannung am Anschlusselement bereitgestellt ist.

Weitere Versorgungsstationen sind aus der DE 10 2016 106 700 A1, der WO 2016/156567 A2 und der US 2018/175563 A1 bekannt.

Bekannt sind darüber hinaus Versorgungsstationen mit einem von außen manuell betätigbaren Bedienelement. Das Bedienelement wirkt mit dem Fehlerstromschutzschaltelement so zusammen, dass das Fehlerstromschutzschaltelement, nachdem es ausgelöst hat und die Spannung abgeschaltet ist, durch Drücken des Bedienelements manuell von der Unterbrechungsschaltstellung zurück in die Überwachungsschaltstellung verbringbar ist. Das Bedienelement kann mithin von einem Benutzer der Ladestation betätigt werden, so dass es im Einzelfall nicht notwendig ist, das Gehäuse der Versorgungsstation durch einen Techniker öffnen zu lassen, um das Fehlerstromschutzschaltelement zu betätigen und die Versorgungsstation wieder in Betrieb nimmt. Ebenso ist bekannt, dass das gleiche Bedienelement mit einer Prüftaste des Fehlerstromschutzschaltelements zusammenwirkt, die manuell betätigt werden kann und der Simulation eines Fehlerfalls dient. Beispielsweise wird die Prüftaste des Fehlerstromschutzschaltelements manuell betätigt, indem das Bedienelement eingedrückt und zugleich gedreht wird.

Nachteilig an dem bekannten Stand der Technik ist, dass die Wiederinbetriebnahme der Versorgungsstation einer separaten, bewussten Handlung bedarf und nicht intuitiv erfolgen kann. Zwar kann man einem Benutzer entsprechende Informationen über ein Display an der Versorgungsstation anzeigen. Gleichwohl bleibt das Risiko, dass technisch beziehungsweise praktisch weniger versierte Personen einen Versorgungsbeziehungsweise Ladevorgang nicht starten können. Darüber hinaus besteht das Risiko, dass ein laufender Ladevorgang durch das Eindrücken und Drehen des Bedienelements missbräuchlich unterbrochen wird.

Aufgabe der vorliegenden Erfindung ist es, eine verbesserte Versorgungsstation und ein Funktionskontrollverfahren hierfür anzugeben.

Zur Lösung der Aufgabe weist die Erfindung die Merkmale des Patentanspruchs 1 auf.

Der besondere Vorteil der Erfindung besteht darin, dass ein Selbsttest des Fehlerstromschutzschaltelements automatisiert beziehungsweise selbsttätig durchgeführt werden kann. Beispielsweise kann der Selbsttest softwareseitig initiiert beziehungsweise getriggert werden, indem ein Prüffehlerstrom aufgeprägt wird. Eine manuelle Betätigung der Prüftaste des Fehlerstromschutzschaltelements ist dann nicht erforderlich. Die Wiederinbetriebnahme der erfindungsgemäßen Versorgungsstation erfordert keine bewusste Handlung des Benutzers und erfolgt insofern intuitiv beziehungsweise unbemerkt. Der Benutzer schließt sein Fahrzeug in der ihm bekannten Weise an die Versorgungsstation an und verbringt beim Verbringen des Verschlusselements in die Öffnungsstellung automatisch und mithin im Wesentlichen unbemerkt das Fehlerstromschutzschaltelement in die Überwachungsschaltstellung. Der Ladevorgang kann insofern direkt gestartet beziehungsweise durchgeführt werden. Der Benutzer erlangt mithin gar keine Kenntnis darüber, dass im Vorfeld das Fehlerstromschutzschaltelement einem Selbsttest unterzogen wurde und er beim Anschließen des elektrisch betreibbaren Fahrzeugs an die Versorgungsstation das Fehlerstromschutzschaltelement wieder eingeschaltet beziehungsweise aktiviert hat.

Das Fehlerstromschutzschaltelement weist als mechanische Betätigungseinrichtung beispielsweise einen Kippschalter mit zwei stabilen Schaltzuständen für die Überwachungsschaltstellung und die Unterbrechungsschaltstellung auf. Die Unterbrechungsschaltstellung kann dabei als eine Vorzugsstellung ausgebildet sein, in die die Betätigungseinrichtung über eine vorgespannte Feder verbracht wird.

Beispielsweise kann die erfindungsgemäße Versorgungsstation ein fest montiertes Ladekabel aufweisen. An einem freien Ende des Ladekabels kann das Anschlusselement vorgesehen sein, welches beispielsweise als Kupplung ausgebildet ist und dem Anschluss an ein im elektrisch betreibbaren Fahrzeug vorgesehenes Gegensteckelement dient. Das Anschlusselement kann, wenn die Versorgungsstation nicht verwendet wird beziehungsweise nicht mit einem Fahrzeug verbunden ist, in einen Adapter eingesetzt sein. In der Schließstellung des Verschlusselements ist der Adapter hinter dem Verschlusselement unzugänglich angeordnet. Beispielsweise kann auf ein fest montiertes Ladekabel verzichtet werden und das Anschlusselement als eine Steckdose ausgebildet sein, die in dem Gehäuse der Versorgungsstation vorgesehen ist und in der Schließstellung des Verschlusselements von ebendiesem überdeckt wird. Das Anschlusselement ist dann unzugänglich und es ist in der Schließstellung nicht möglich, ein externes Ladekabel mit dem Anschlusselement elektrisch leitend zu verbinden.

Nach einer bevorzugten Ausführungsform der Erfindung ist ein Drehhebel vorgesehen zur Herstellung der Wirkverbindung zwischen dem Verschlusselement und der mechanischen Betätigungseinrichtung des Fehlerstromschutzschaltelements. Der Drehhebel ist bevorzugt unzugänglich in dem Gehäuse der Versorgungsstation angeordnet. Vorteilhaft ist durch das unzugängliche Anordnen des Drehhebels im Inneren der Versorgungsstation einer missbräuchlichen Unterbrechung des laufenden Ladevorgangs durch Dritte entgegengewirkt.

Nach einer Weiterbildung der Erfindung ist der Drehhebel beabstandet zu dem Verschlusselement vorgesehen, wenn sich das Verschlusselement in der Schließstellung und das Fehlerstromschutzschaltelement in der Überwachungsschaltstellung befindet. Eine Kopplung der Bewegung beziehungsweise Betätigung des Verschlusselements und der mechanischen Betätigungseinrichtung des Fehlerstromschutzschaltelements erfolgt insofern nur, wenn sich das Fehlerstromschutzschaltelement in der Unterbrechungsschaltstellung befindet. Andernfalls ist eine Freilauffunktion realisiert. Insbesondere ist es durch die Entkopplung der Bewegung der Bauteile möglich, das Verschlusselement von der Öffnungsstellung in die Schließstellung zu verbringen, ohne dass zugleich das Fehlerstromschutzschaltelement in die Unterbrechungsschaltstellung gelangt.

Nach einer Weiterbildung der Erfindung sieht der Drehhebel einen dem Verschlusselement zugeordneten Aktivierungsabschnitt und einen dem Fehlerstromschutzschaltelement zugeordneten Auslöseabschnitt vor. Der Aktivierungsabschnitt und der Auslöseabschnitt liegen bevorzugt auf gegenüberliegenden Seiten eines Drehpunkts des Drehhebels.

Der Auslöseabschnitt sieht beispielsweise einen Verbindungsbereich vor, welcher insbesondere V-förmig beziehungsweise haubenartig ausgebildet sein kann und die mechanische Betätigungseinrichtung des Fehlerstromschutzschaltelements jedenfalls abschnittsweise formschlüssig umgreift.

Der Aktivierungsabschnitt des Drehhebels wird mit dem Verschlusselement zusammen. Insbesondere berührt das Verschlusselement den Aktivierungsabschnitt, wenn es in die Öffnungsstellung verbracht wird und das Fehlerstromschutzschaltelement aus der Unterbrechungsschaltstellung in die Überwachungsschaltstellung verbracht, das heißt aktiviert wird.

Der Drehhebel kann beispielsweise aus Kunststoff gefertigt sein. Beispielsweise kann der Drehhebel als ein Kunststoffspritzgießteil und/oder durch ein additives Fertigungsverfahren hergestellt werden. Das Verschlusselement kann beispielsweise als längsverschiebbares Verschlusselement und bevorzugt als Schiebedeckel und/oder als Drehklappe realisiert sein. Ein Schwenkwinkel des Drehhebels liegt bevorzugt im Bereich von weniger als 60° und besonders bevorzugt im Bereich von maximal 45°.

Die Erfindung ist nicht darauf beschränkt, dass die Wirkverbindung zwischen dem Verschlusselement und dem Fehlerstromschutzschaltelement über den Drehhebel hergestellt wird. Beispielsweise können das Fehlerstromschutzschaltelement und das Verschlusselement direkt gekoppelt sein oder es kann eine andere Verbindung, beispielsweise ein Schieber, eine Feder oder eine mehrteilige Gelenkkette vorgesehen sein zur Herstellung der Wirkverbindung.

Nach einer Weiterbildung der Erfindung kann das Fehlerstromschutzschaltelement von außen unzugänglich in dem Gehäuse der Versorgungsstation vorgesehen sein. Das Fehlerstromschutzschaltelement kann dann von einem Benutzer nicht unmittelbar betätigt werden und ein Zugriff auf das Fehlerstromschutzschaltelement ist nur möglich, wenn das Gehäuse beispielsweise im Rahmen einer Wartung oder Inspektion durch einen Techniker geöffnet wird.

Zur Lösung der Aufgabe weist die Erfindung die Merkmale des Patentanspruchs 11 auf. Demzufolge sieht ein Funktionskontrollverfahren für eine Ladestation mit einem Gehäuse, mit einem in dem Gehäuse angeordneten und einer Öffnung des Gehäuses zugeordneten Anschlusselement und mit einem der Öffnung des Gehäuses zugeordneten Verschlusselement, welches von einer von einer Öffnungsstellung, in der das Anschlusselement zugänglich in dem Gehäuse angeordnet ist, in eine Schließstellung verbringbar ist, in der die Öffnung jedenfalls abschnittsweise verschlossen und/oder das Anschlusselement unzugänglich in dem Gehäuse angeordnet ist, die folgende Verfahrensschritte vor:
- ein Fehlerstromschutzschaltelement der Versorgungsstation wird selbsttätig, das heißt automatisiert zur routinemäßigen Funktionsprüfung von einer Überwachungsschaltstellung in eine Unterbrechungsschaltstellung verbracht,
- bei der nächsten Verbringung des Verschlusselements in die Öffnungsstellung wird das Fehlerstromschutzschaltelement von der Unterbrechungsschaltstellung zurück in die Überwachungsschaltstellung verbracht.

Der besondere Vorteil der Erfindung besteht darin, dass die Funktionsprüfung für das Fehlerstromschutzschaltelement im Sinne eines Selbsttests automatisch durchgeführt beziehungsweise veranlasst werden kann und dass das Fehlerstromschutzschaltelement, sofern es im Selbsttest seine ordnungsgemäße Funktion gezeigt und ausgelöst hat, bei der nächsten Verwendung der Versorgungsstation automatisch zurück in die Überwachungsschaltstellung verbracht wird. Weder ist es erforderlich, dass ein Techniker vor Ort die Funktionsprüfung manuell durchführt beziehungsweise das Fehlerstromschutzschaltelement wieder in die Überwachungsschaltstellung verbringt, noch muss der Benutzer das Fehlerstromschutzschaltelement manuell unmittelbar betätigen, um die Versorgungsstation zu reaktivieren.

Beispielsweise kann der Selbsttest softwareseitig ausgelöst beziehungsweise getriggert werden, indem ein Fehlerstrom aufgeprägt wird und so die Auslösefunktion der Fehlerstromschutzschaltelements geprüft wird.

Zusätzlich gewährleistet das erfindungsgemäße Funktionskontrollverfahren, dass insbesondere im privaten Bereich eingesetzte Versorgungsstationen einer regelmäßigen Funktionskontrolle in Bezug auf das Fehlerstromschutzschaltelement unterzogen werden. Im privaten Bereich eingesetzte Versorgungsstationen verfügen heute üblicherweise nicht über ein nach außen geführtes, mit dem Fehlerstromschutzschaltelement zusammenwirkendes Bedienelement. Stattdessen muss das Gehäuse der im privaten Bereich eingesetzten Versorgungsstation geöffnet und die Funktionsprüfung für das Fehlerstromschutzschaltelement manuell durchgeführt werden. Bedienhinweise hierzu findet der Benutzer typischerweise im Handbuch. Erfahrungsgemäß wird der Selbsttest in vielen Fällen nicht oder zumindest nicht regelmäßig durchgeführt mit der Folge, dass eine Fehlfunktion des Fehlerstromschutzschaltelements mithin über einen langen Zeitraum nicht erkannt wird.

Nach einer bevorzugten Ausführungsform der Erfindung wird die routinemäßige Funktionsprüfung durchgeführt, während das Verschlusselement in der Schließstellung vorgesehen ist. Sofern das Verschlusselement sich in der Schließstellung befindet, ist das Anschlusselement unzugänglich in dem Gehäuse der Versorgungsstation angeordnet und ein Ladevorgang wird nicht durchgeführt. Die Funktionsprüfung wird also durchgeführt, wenn die Versorgungsstation nicht verwendet wird. Ein laufender Ladevorgang wird nicht unterbrochen.

Nach einer Weiterbildung der Erfindung wird die routinemäßige Funktionsprüfung nach Ablauf eines vorgegebenen Zeitintervalls, beispielsweise etwa alle sechs Monate, nach Erreichen einer vorgegebenen Betriebsstundenzahl, nach Erreichen beziehungsweise Überschreiten einer vorgegebenen Anzahl von Ladevorgängen und/oder nach Bereitstellung einer vorspezifizierten Energiemenge durchgeführt.

Aus den weiteren Unteransprüchen und der nachfolgenden Beschreibung sind weitere Vorteile, Merkmale und Einzelheiten der Erfindung zu entnehmen. Dort erwähnte Merkmale können jeweils einzeln für sich oder auch in beliebiger Kombination erfindungswesentlich sein. Erfindungsgemäß beschriebene Merkmale und Details der Versorgungsstation gelten selbstverständlich auch im Zusammenhang mit dem erfindungsgemäßen Funktionskontrollverfahren und umgekehrt. So kann auf die Offenbarung zu den einzelnen Erfindungsaspekten stets wechselseitig Bezug genommen werden. Die Zeichnungen dienen lediglich beispielhaft der Klarstellung der Erfindung und haben keinen einschränkenden Charakter.

Es zeigen:
- Fig. 1: eine perspektivische Ansicht eines ersten Ausformungsbeispiels einer erfindungsgemäßen Versorgungsstation umfassend ein Gehäuse mit einer Öffnung und einem der Öffnung zugeordneten Verschlusselement in einer Schließstellung,
- Fig. 2: die Versorgungsstation nach Fig. 1 mit dem Verschlusselement in einer Öffnungsstellung,
- Fig. 3: eine perspektivische Rückseitenansicht einer Anschlusseinheit der Versorgungsstation nach den Fig. 1 und 2 mit einem Fehlerstromschutzschaltelement in einer Überwachungsschaltstellung und dem Verschlusselement in der Schließstellung,
- Fig. 4: eine perspektivische Vorderseitenansicht der Anschlusseinheit nach Fig. 3 in einem Teilschnitt,
- Fig. 5: die Darstellung der Anschlusseinheit nach den Fig. 3 und 4 mit dem Verschlusselement in der Öffnungsstellung,
- Fig. 6: eine perspektivische Aufsicht auf die Anschlusseinheit nach Fig. 5,
- Fig. 7: eine perspektivische Rückseitenansicht der Anschlusseinheit nach den Fig. 3 bis 6 mit dem Fehlerstromschutzschaltelement in einer Unterbrechungsschaltstellung und dem Verschlusselement in der Schließstellung,
- Fig. 8: eine perspektivische Vorderseitenansicht der Anschlusseinheit nach den Fig. 3 bis 7 in einem Teilschnitt,
- Fig. 9: eine perspektivische Vorderseitenansicht einer das Fehlerstromschutzschaltelement in der Unterbrechungsschaltstellung umfassenden Sicherungsbaugruppe der Anschlusseinheit nach den Fig. 3 bis 8,
- Fig. 10: eine perspektivische Darstellung eines Drehhebels der Anschlusseinheit nach den Fig. 3 bis 9,
- Fig. 11: eine Seitenansicht des Drehhebels nach Fig. 10,
- Fig. 12: eine perspektivische Ansicht eines zweiten Ausformungsbeispiels derer erfindungsgemäßen Versorgungsstation mit einem fest montierten Ladekabel, wobei ein Anschlusselement der Ladestation in einen Adapter eingesetzt ist,
- Fig. 13: eine perspektivische Darstellung der Versorgungsstation nach Fig. 12, wobei das Anschlusselement aus dem Adapter entnommen und das Verschlusselement in der Öffnungsstellung vorgesehen ist, und
- Fig. 14: eine perspektivische Darstellung der Versorgungsstation nach den Fig. 12 und 13 mit dem Verschlusselement in der Schließstellung.

Eine Versorgungsstation dient im öffentlich zugänglichen Bereich sowie im privaten Umfeld der Bereitstellung elektrischer Energie für ein elektrisch betreibbares Fahrzeug. Die Versorgungsstation umfasst als wesentliche Funktionskomponenten ein mehrteilig ausgebildetes Gehäuse 1, welches einen Gehäusedeckel und eine Gehäusewanne vorsieht, mit der Öffnung 2, ein der Öffnung 2 zugeordnetes Verschlusselement 3 zum wahlweisen Freigeben beziehungsweise Verschließen der Öffnung 2, ein Anschlusselement 4, welches dem Anschluss des elektrisch betreibbaren Fahrzeugs an die Versorgungsstation dient, sowie ein Schaltelement zum wahlweisen Ein- und Ausschalten des Anschlusselements 4 und ein Fehlerstromschutzschaltelement 5. Das Schaltelement, welches beispielsweise als Schütz ausgebildet ist, sowie das Fehlerstromschutzschaltelement 5 sind einer elektrischen Zuleitung zugeordnet, über die das Anschlusselement 4 an ein Versorgungsnetz angeschlossen ist.

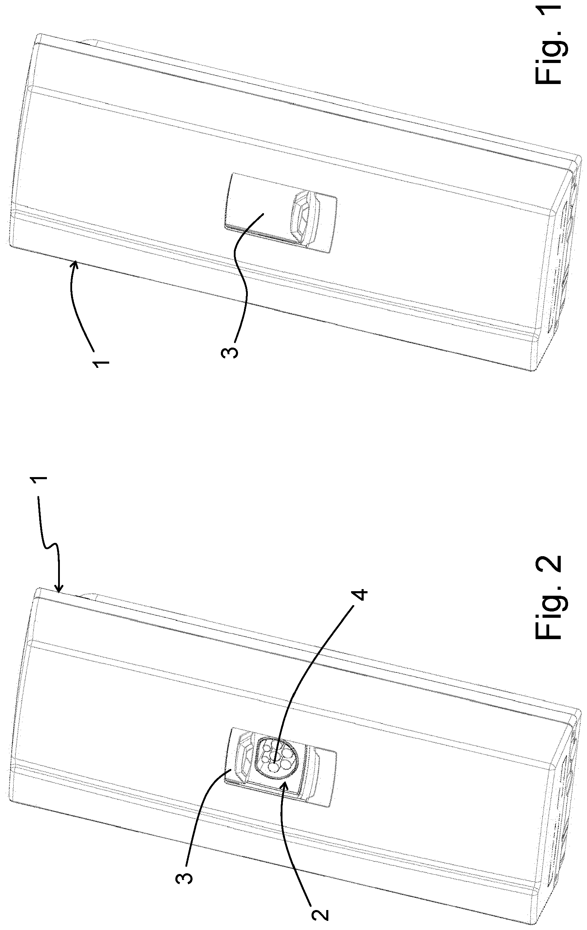

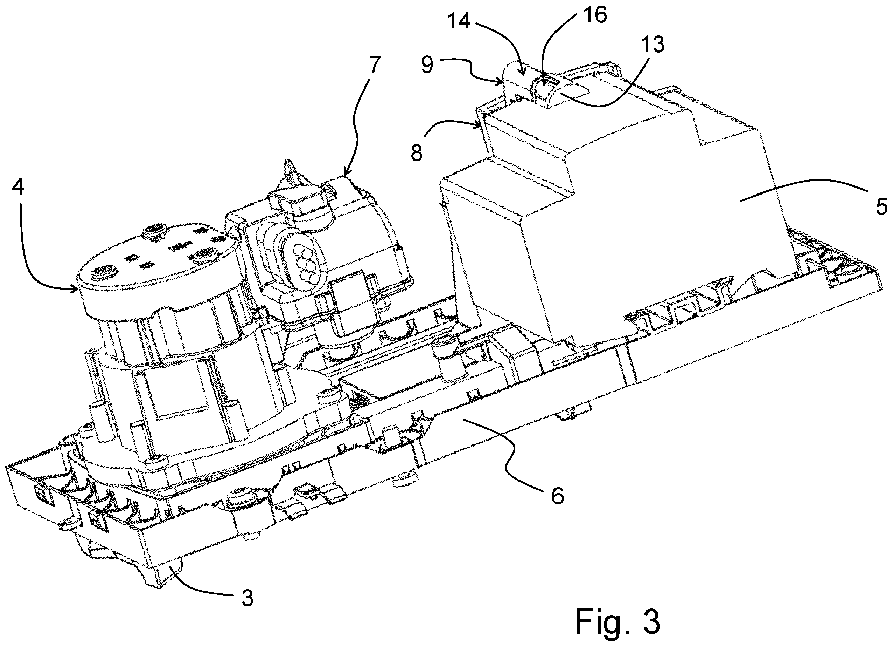

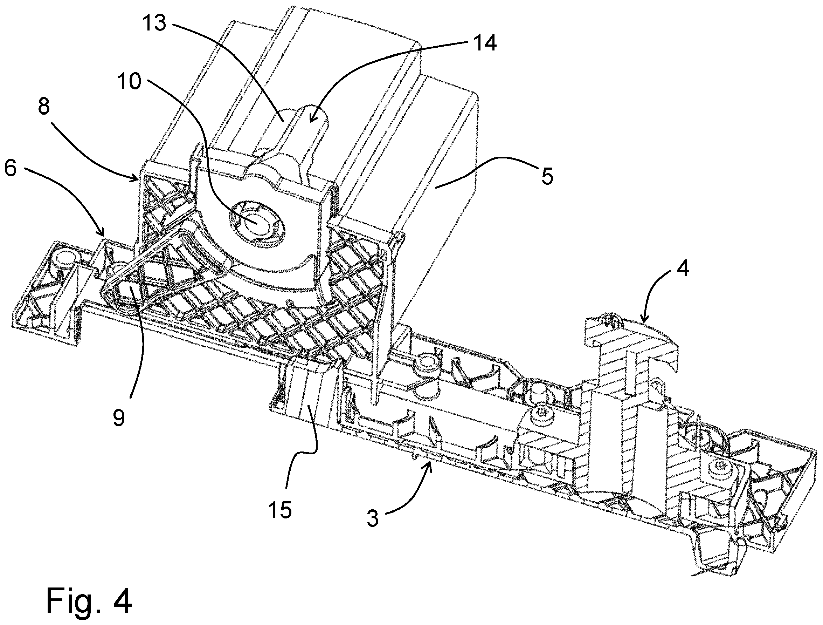

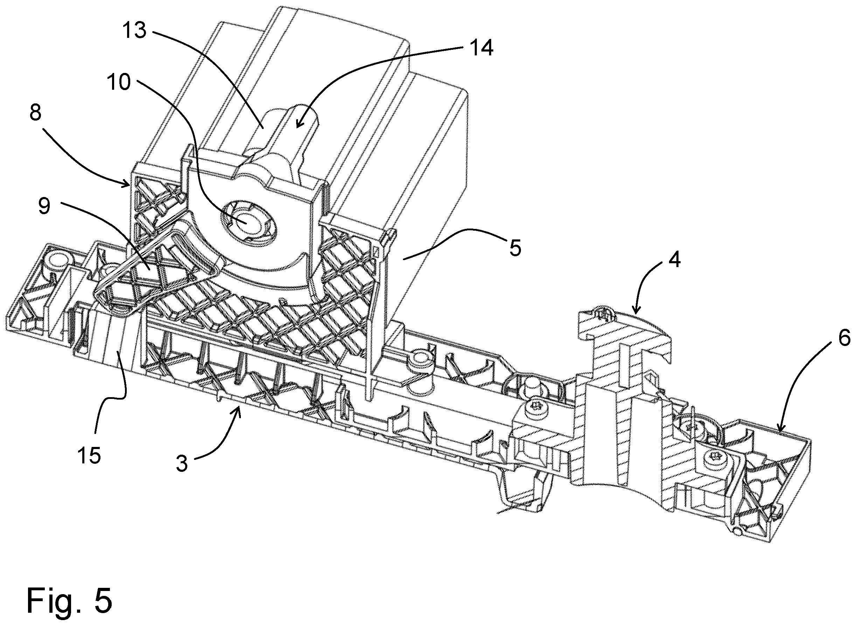

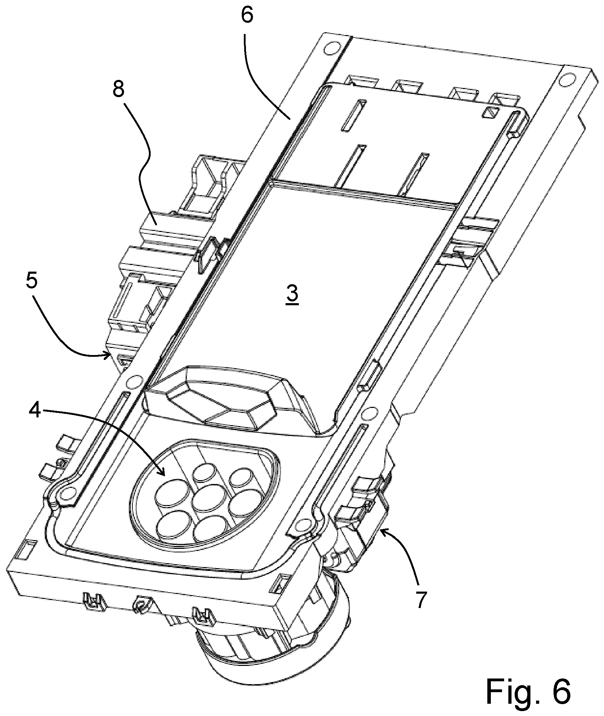

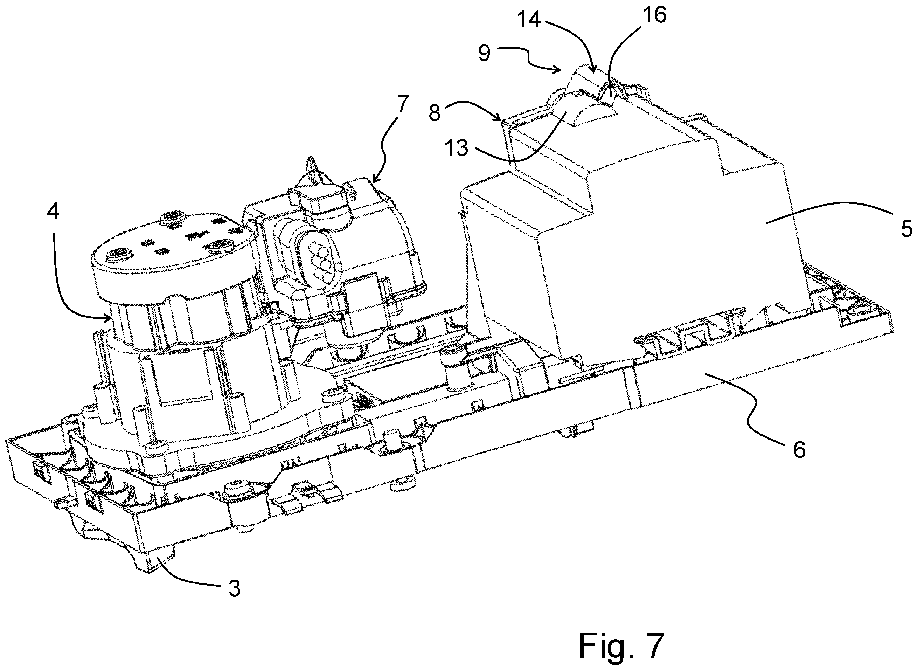

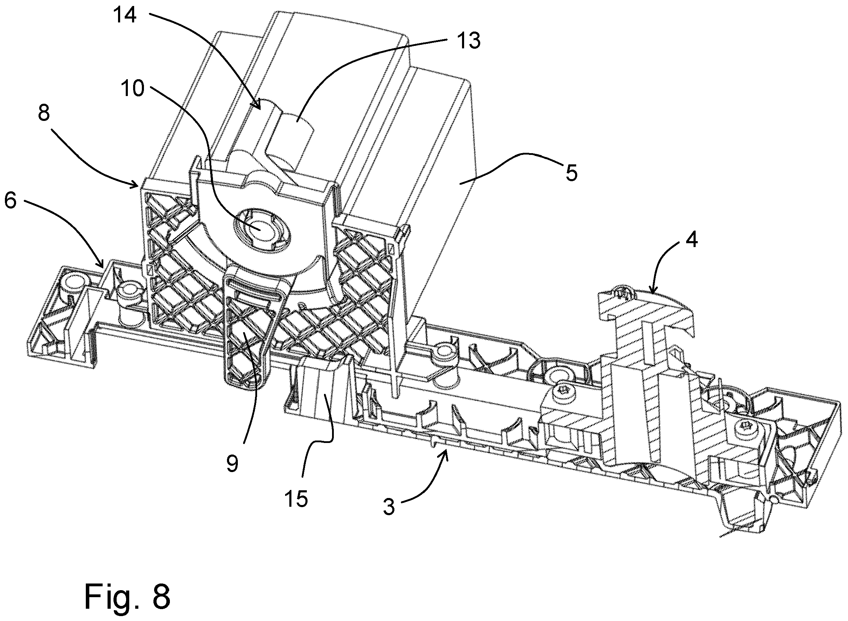

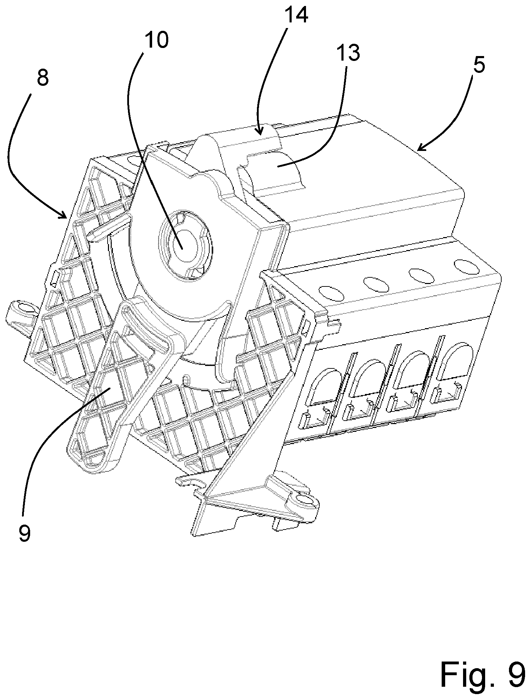

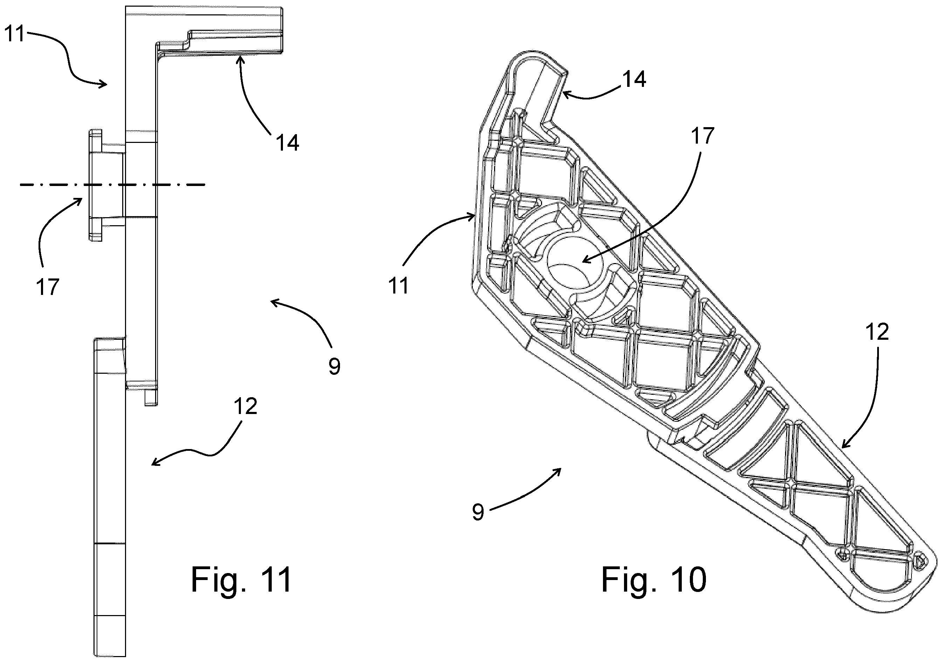

Das Anschlusselement 4, welches in einem ersten Ausführungsbeispiel der Erfindung nach den Fig. 1 bis 11 als ein Steckelement ausgebildet ist, ist in dem Gehäuse 1 der Versorgungsstation der an dem Gehäusedeckel vorgesehenen Öffnung 2 beziehungsweise dem der Öffnung 2 zugeordneten Verschlusselement 3 so zugeordnet, dass es in einer Schließstellung des Verschlusselements 3 verdeckt hinter dem Verschlusselement 3 und unzugänglich angeordnet ist und dass es in einer Öffnungsstellung zugänglich ist. In der Öffnungsstellung kann ein Gegensteckelement, beispielsweise das Gegensteckelement eines mit der Versorgungsstation einerseits und dem elektrischen Fahrzeug andererseits verbindbaren Ladekabels, in das Steckelement 4 eingesetzt werden zum Herstellen einer elektrisch leitenden Verbindung mit dem elektrisch betreibbaren Fahrzeug.

Das Verschlusselement 3 ist vorliegend als längsverschiebbares Verschlusselement 3 beziehungsweise als Schiebedeckel ausgeführt. Optional kann dem Verschlusselement 3 ein Verriegelungselement zugeordnet sein zum Festlegen beziehungsweise Verriegeln des Verschlusselements 3 in der Öffnungs- und/oder Schließstellung.

Im Inneren des Gehäuses 1 der Versorgungsstation ist eine Anschlusseinheit vorgesehen mit dem Steckelement 4, dem Verschlusselement 3 und dem Fehlerstromschutzschaltelement 5. Darüber hinaus sieht die Anschlusseinheit eine Grundplatte 6, eine Verriegelungseinrichtung 7, einen Träger 8 für das Fehlerstromschutzschaltelement 5 sowie einen Drehhebel 9 vor. In der Grundplatte 6 ist das manuell betätigbare Verschlusselement 3 längsverschiebbar gehalten. Die Verriegelungseinrichtung 7 dient dazu, ein an das Steckelement 4 angesetztes Gegensteckelement zu verriegeln. Hierdurch ist sichergestellt, dass das Gegensteckelement nicht während des laufenden Ladevorgangs von dem Steckelement 4 getrennt und der Ladevorgang unbeabsichtigt oder missbräuchlich abgebrochen werden kann.

Der Träger 8 dient der Aufnahme des Fehlerstromschutzschaltelements 5. Er ist an der Grundplatte 6 festgelegt. An dem Träger 8 ist in einem Drehpunkt 10 der Drehhebel 9 drehbar gehalten. Zum Verbinden des Drehhebels 9 mit dem Träger 8 ist ein Bajonettverschluss vorgesehen und an dem Drehhebel 9 eine zylindrische Durchgangsausnehmung 17 realisiert.

Auf gegenüberliegenden Seiten des Drehpunkts 10 weist der Drehhebel 9 einen Aktivierungsabschnitt 12 sowie einen Auslöseabschnitt 11 vor. Der Auslöseabschnitt 11 ist im montierten Zustand der Anschlusseinheit einer nach Art eines Kippschalters ausgebildeten mechanischen Betätigungseinrichtung 13 des Fehlerstromschutzschaltelements 5 zugeordnet. An einem dem Drehpunkt 10 abgewandten freien Ende des Auslöseabschnitts 11 ist ein V-förmiger beziehungsweise haubenförmiger Verbindungsbereich 14 gebildet, der einen Hebelabschnitt 16 der mechanischen Betätigungseinrichtung 13 formschlüssig umgreift. Die formschlüssige Verbindung zwischen dem Drehhebel 9 und der mechanischen Betätigungseinrichtung 13 des Fehlerstromschutzschaltelements 5 ist dabei so gebildet, dass der Drehhebel 9 um den Drehpunkt 10 verschwenkt, wenn das Fehlerstromschutzschaltelement 5 mit der mechanischen Betätigungseinrichtung 13 von einer Überwachungsschaltstellung in eine Unterbrechungsschaltstellung oder zurück verbracht wird, das heißt auslöst.

Der Aktivierungsabschnitt 12 des Drehhebels 9 ist einem nockenförmigen, an dem Verschlusselement 3 vorgesehenen Kontaktabschnitt 15 so zugeordnet, dass der Drehhebel 9 beim Öffnen des Verschlusselements 3 um den Drehpunkt 10 verschwenkt wird, sofern sich die mechanische Betätigungseinrichtung 13 in dem zu der Unterbrechungsschaltstellung des Fehlerstromschutzschaltelements 5 zugehörigen Schaltzustand befindet. Durch das Verdrehen des Drehhebels 9 um den Drehpunkt 10 wird beim Öffnen des Verschlusselements 3 infolge des zwischen dem Verbindungsbereich 14 und der mechanischen Betätigungseinrichtung 13 gebildeten Formschlusses das Fehlerstromschutzschaltelement 5 aus der Unterbrechungsschaltstellung in die Überwachungsschaltstellung verbracht.

Eine Kopplung der Bewegung des Verschlusselements 3 mit der Drehbewegung des Drehhebels 9 ist nur für den Fall gegeben, dass das Fehlerstromschutzschaltelement 5 sich in der Unterbrechungsschaltstellung befindet. Sofern das Fehlerstromschutzschaltelement 5 sich in der Überwachungsschaltstellung befindet, ist die Drehstellung des Drehhebels 9 so definiert, dass das Verschlusselement 3 ohne Betätigung des Drehhebels 9 beziehungsweise ohne Betätigung des Fehlerstromschutzschaltelements 5 von der Öffnungsstellung in die Schließstellung und zurück verbracht werden kann. Eine Wirkverbindung zwischen dem Verschlusselement 3 und der mechanischen Betätigungseinrichtung 13 des Fehlerstromschutzschaltelements 5 ist insofern vorgesehen, wenn das Fehlerstromschutzschaltelement 5 sich in der Unterbrechungsschaltstellung befindet. Die Wirkverbindung ist so ausgebildet, dass das Fehlerstromschutzschaltelement 5 beim Verbringen des Verschlusselements 3 von der Schließstellung in die Öffnungsstellung seinerseits von der Unterbrechungsschaltstellung in die Überwachungsschaltstellung verbracht wird.

Um nun eine Funktionsprüfung für das Fehlerstromschutzschaltelement 5 durchzuführen, wird dieses softwareseitig ausgelöst und so in die Unterbrechungsschaltstellung verbracht. Die routinemäßige Funktionsprüfung erfolgt dabei bevorzugt, wenn das Verschlusselement 3 sich in der Schließstellung befindet. Beispielsweise kann vorgesehen sein, dass ein Sensor die Schließstellung des Verschlusselements 3 detektiert.

Durch das Auslösen des Fehlerstromschutzschaltelements 5 verschwenkt die mechanische Betätigungseinrichtung 13 desselben und nimmt dabei den Drehhebel 9 mit. Der Drehhebel 9 wird so verschwenkt, dass der Aktivierungsabschnitt 12 in Richtung des Verschlusselements 3 gedreht wird. Nach dem Auslösen des Fehlerstromschutzschaltelements 5 kann der Drehhebel 9 mit dem Aktivierungsabschnitt 12 an dem Kontaktabschnitt 15 des Verschlusselements 3 anliegen oder in einem vergleichsweise geringen Abstand zu dem Kontaktabschnitt 15 vorgesehen werden.

Sofern das Fehlerstromschutzschaltelement 5 softwareseitig ausgelöst werden kann und die Zuleitung unterbricht, ist seine Funktion gewährleistet. Einem Weiterbetrieb der Versorgungsstation steht dann nichts im Wege. Insofern kann die Versorgungsstation wieder in Betrieb genommen werden. Dies erfolgt bei der nächsten Verwendung zwangsweise, indem das Verschlusselement 3 aus der Schließstellung in die Öffnungsstellung verbracht und dabei der Drehhebel 9 zurück verschwenkt wird. Mit dem Drehhebel 9 wird die mechanische Betätigungseinrichtung 13 geschaltet und das Fehlerstromschutzschaltelement 5 aus der Unterbrechungsschaltstellung zurück in die Überwachungsschaltstellung verbracht.

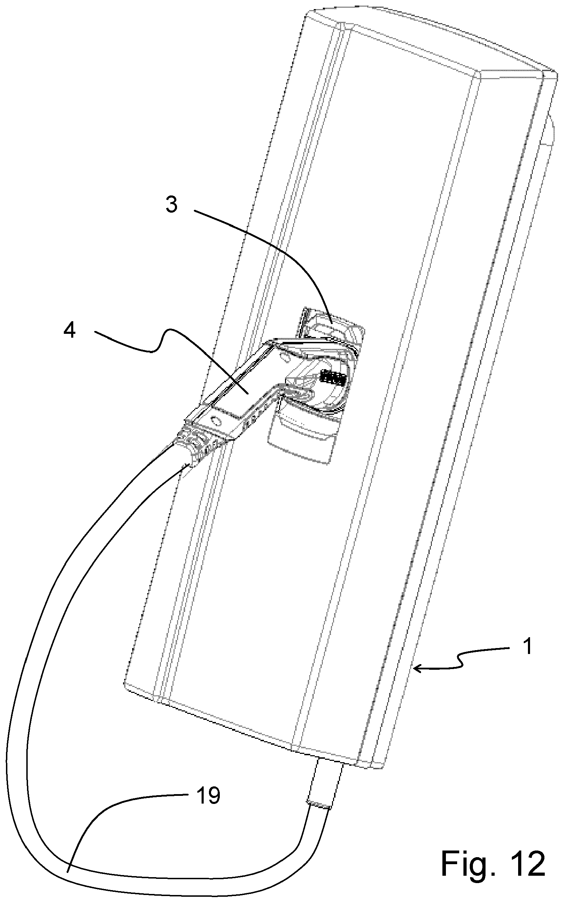

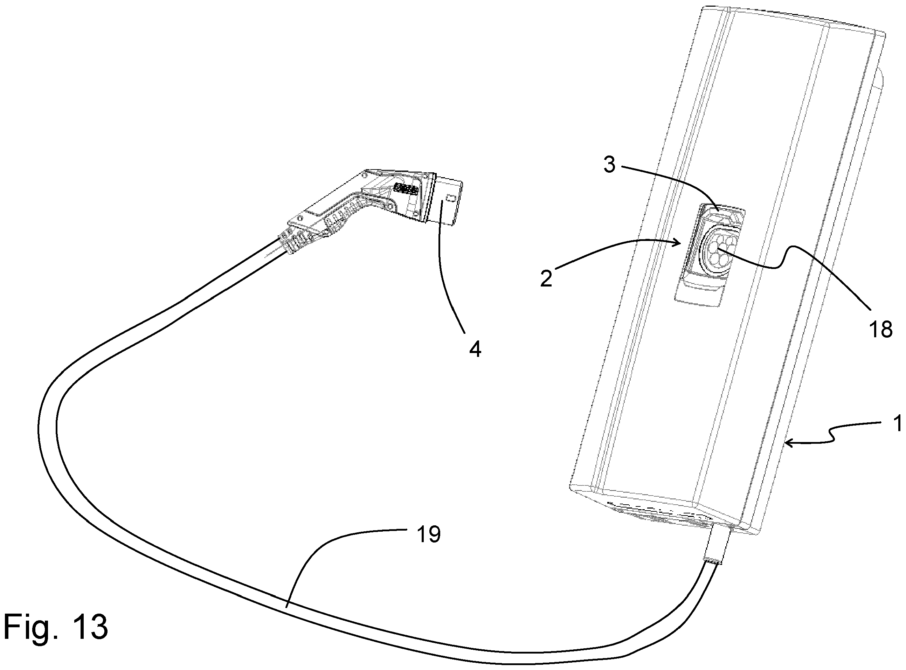

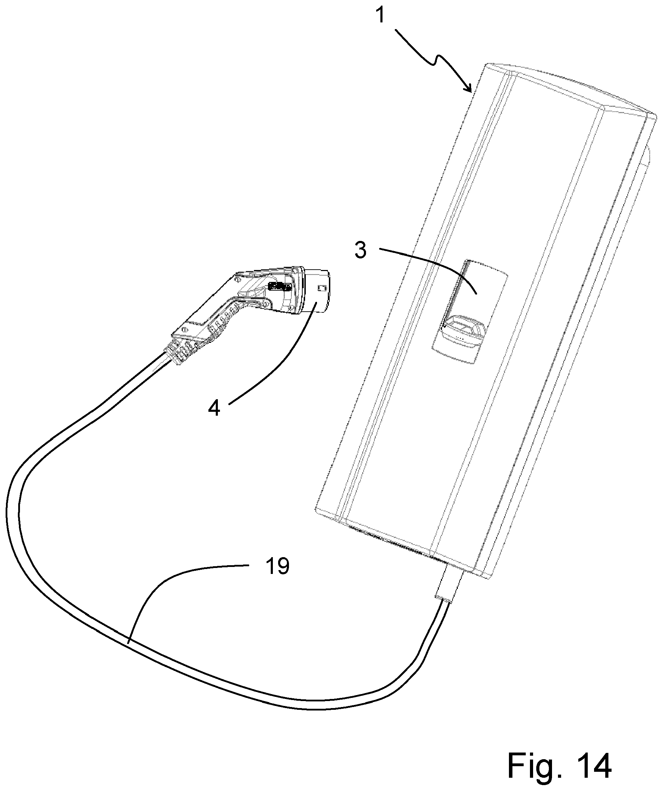

Ein zweites Ausführungsbeispiel der erfindungsgemäßen Versorgungsstation nach den Fig. 12 bis 14 sieht ein angeschlagenes, das heißt fest montiertes Ladekabel 19 vor, das aus dem Gehäuse 1 der Versorgungsstation herausgeführt wird. An dem Ladekabel 19 ist an einem freien Ende desselben das Anschlusselement 4 vorgesehen, dass als eine Kupplung ausgebildet ist. Die Kupplung 4 kann an ein in dem elektrisch betreibbaren Fahrzeug vorgesehenes Gegensteckelement angesetzt werden zum Anschluss des Fahrzeugs an die Versorgungsstation.

In einer Nichtverwendungsstellung der Versorgungsstation ist das Verschlusselement 3 in der Öffnungsstellung und die Kupplung 4 in einen elektrisch nicht kontaktierten Adapter 18 eingesetzt, der in dem Gehäuse 1 vorgesehen und durch die freigegebene Öffnung 2 zugänglich ist. Wenn die Kupplung 4 aus dem Adapter 18 entnommen und mit dem Gegensteckelement des elektrisch betreibbaren Fahrzeugs verbunden wird, kann das Verschlusselement 3 in die Schließstellung verbraucht werden. Die Öffnung 2 ist dann verschlossen und der Adapter 2 hinter dem Schließelement unzugänglich in dem Gehäuse 1 angeordnet.

Die Erfindung ist nicht auf die beiden dargestellten Ausführungsbeispiele beschränkt. Beispielsweise kann das Verschlusselement drehbar beziehungsweise schwenkbar ausgeführt sein. Das Vorsehen einer Anschlusseinheit als integrierte Baugruppe ist nicht erforderlich. Die einzelnen Funktionskomponenten können beispielsweise verteilt in dem Gehäuse der Versorgungsstation angeordnet sein.

Verfahrensseitig kann vorgesehen sein, dass der Impuls zur Durchführung des Selbsttests manuell initiiert und/oder von einer übergeordneten, ortsfern zu der Versorgungsstation vorgesehenen Zentrale an die Versorgungsstation gesendet wird.

Gleiche Bauteile und Bauteilfunktionen sind durch gleiche Bezugszeichen gekennzeichnet.

## Patentansprüche

1. Versorgungsstation zum Bereitstellen elektrischer Energie für ein elektrisch betreibbares Fahrzeug umfassend
- eine elektrische Zuleitung - ein Anschlusselement (4), welches über die elektrische Zuleitung an ein Versorgungsnetz anschließbar ist und dem Anschluss an das elektrisch betreibbare Fahrzeug dient,
- ein der elektrischen Zuleitung zugeordnetes Schaltelement zum Ein- und Ausschalten des Anschlusselements (4),
- ein Fehlerstromschutzschaltelement (5), welches wie das Schaltelement der elektrischen Zuleitung zugeordnet ist,
- ein Gehäuse (1), welches die elektrische Zuleitung und das Fehlerstromschutzschaltelement (5) jedenfalls abschnittsweise umgreift und eine Öffnung (2) vorsieht,
- ein der Öffnung (2) zugeordnetes Verschlusselement (3), welches manuell von einer Öffnungsstellung, in der die Öffnung (2) freigegeben ist, in eine Schließstellung verbringbar ist, in der die Öffnung (2) jedenfalls abschnittsweise verschlossen ist,
wobei das Fehlerstromschutzschaltelement (5) eine Betätigungseinrichtung (13) vorsieht zum Verbringen des Fehlerstromschutzschaltelements (5) von einer Überwachungsschaltstellung als einen ersten Schaltzustand des Fehlerstromschutzschaltelements (5) in eine Unterbrechungsschaltstellung als einen zweiten Schaltzustand des Fehlerstromschutzschaltelements (5) und zurück, **dadurch gekennzeichnet, dass** die Betätigungseinrichtung (13) eine mechanische Betätigungseinrichtung (13) ist und dass zwischen dem Verschlusselement (3) und der mechanischen Betätigungseinrichtung (13) des Fehlerstromschutzschaltelements (5) eine Wirkverbindung mit einer Freilauffunktion hergestellt ist derart, dass durch ein Verbringen des Verschlusselements (3) in die Öffnungsstellung das Fehlerstromschutzschaltelement (5) von der Unterbrechungsschaltstellung in die Überwachungsschaltstellung verbringbar ist, ohne dass beim Verbringen des Verschlusselements (3) von der Öffnungsstellung in die Schließstellung das Fehlerstromschutzschaltelement (5) in die Unterbrechungsschaltstellung gelangt.

2. Versorgungsstation nach Anspruch 1, **dadurch gekennzeichnet, dass** zum Herstellen der Wirkverbindung zwischen dem Verschlusselement (3) und der mechanischen Betätigungseinrichtung (13) des Fehlerstromschutzschaltelements (5) ein Drehhebel (9) vorgesehen ist und/oder dass der Drehhebel (9) in dem Gehäuse (1) von außen unzugänglich angeordnet ist.

3. Versorgungsstation nach Anspruch 1 oder 2, **dadurch gekennzeichnet, dass** der Drehhebel (9) beabstandet zu dem Verschlusselement (3) vorgesehen ist, wenn das Verschlusselement (3) in der Schließstellung und das Fehlerstromschutzschaltelement (5) in der Überwachungsschaltstellung vorgesehen ist.

4. Versorgungsstation nach einem der Ansprüche 1 bis 3, **dadurch gekennzeichnet, dass** der Drehhebel (9) einen dem Verschlusselement (3) zugeordneten Aktivierungsabschnitt (12) und einen dem Fehlerstromschutzschaltelement (5) zugeordneten Auslöseabschnitt (11) vorsieht.

5. Versorgungsstation nach Anspruch 4, **dadurch gekennzeichnet, dass** der Aktivierungsabschnitt (12) und der Auslöseabschnitt (11) auf gegenüberliegenden Seiten eines Drehpunkts (10) des Drehhebels (9) vorgesehen sind.

6. Versorgungsstation nach Anspruch 4 oder 5, **dadurch gekennzeichnet, dass** der Auslöseabschnitt (11) des Drehhebels (9) einen Verbindungsbereich (14) vorsieht und/oder dass der Verbindungsbereich (14) die mechanische Betätigungseinrichtung (13) des Fehlerstromschutzschaltelements (5) und/oder einen Hebelabschnitt (16) der mechanischen Betätigungseinrichtung (13) jedenfalls abschnittsweise umgreift.

7. Versorgungsstation nach einem der Ansprüche 1 bis 6, **dadurch gekennzeichnet, dass** das Verschlusselement (3) als ein längsverschiebbares Verschlusselement (3) und bevorzugt als ein Schiebedeckel vorgesehen ist.

8. Versorgungsstation nach einem der Ansprüche 1 bis 7, **dadurch gekennzeichnet, dass** das Anschlusselement (4) der Öffnung (2) derart zugeordnet ist, dass das Anschlusselement (4) in der Öffnungsstellung des Verschlusselements (3) zugänglich und in der Schließstellung nicht zugänglich angeordnet ist und/oder dass das Anschlusselement (4) jedenfalls abschnittsweise von dem Gehäuse (1) umgriffen ist.

9. Versorgungsstation nach einem der Ansprüche 1 bis 8, **dadurch gekennzeichnet, dass** ein fest montiertes Ladekabel vorgesehen ist, wobei an einem freien Ende des fest montierten Ladekabels das Anschlusselement (4) vorgesehen ist.

10. Versorgungsstation nach einem der Ansprüche 1 bis 9, **dadurch gekennzeichnet, dass** das Fehlerstromschutzschaltelement (5) von außen unzugänglich in dem Gehäuse (1) angeordnet ist.

11. Funktionskontrollverfahren für eine Versorgungsstation nach einem der Ansprüche 1 bis 10, **dadurch gekennzeichnet, dass** das Fehlerstromschutzschaltelement (5) der Versorgungsstation selbsttätig von einer Überwachungsschaltstellung in eine Unterbrechungsschaltstellung verbracht wird zur routinemäßigen Funktionsprüfung und dass bei der nächsten Verbringung des Verschlusselements (3) in die Öffnungsstellung das Fehlerstromschutzschaltelement (5) von der Unterbrechungsschaltstellung zurück in die Überwachungsschaltstellung verbracht wird.

12. Funktionskontrollverfahren nach Anspruch 11, **dadurch gekennzeichnet, dass** die routinemäßige Funktionsprüfung durchgeführt wird, wenn das Verschlusselement (3) in der Schließstellung vorgesehen ist und/oder ein Ladevorgang nicht durchgeführt wird und/oder ein elektrisch betreibbares Fahrzeug nicht an die Versorgungsstation angeschlossen ist.

13. Funktionskontrollverfahren nach Anspruch 11 oder 12, **dadurch gekennzeichnet, dass** die routinemäßige Funktionsprüfung nach Ablauf eines vorgegebenen Zeitintervalls und/oder nach Erreichen einer vorgegebenen Betriebsstundenzahl und/oder nach Erreichen einer vorgegebenen Anzahl von Ladevorgängen und/oder nach der Bereitstellung einer vorspezifizierten Energiemenge durchgeführt wird.

## Claims

1. Supply station for providing electric power for an electrically operable vehicle, comprising
- an electric supply line,
- a terminal element (4) connectable to a supply network via the electric supply line and serving for connection to the electrically operable vehicle,
- a switching element, assigned to the electric supply line, for switching the terminal element (4) on and off,
- a fault current protection switching element (5), which like the switching element is assigned to the electric supply line,
- a housing (1) which encloses each of the electric feed line and the fault current protection switching element (5) in portions and provides an opening (2),
- a closure element (3) assigned to the opening (2) and manually transferable from an open position in which the opening (2) is exposed to a closed position in which the opening (2) is closed at least in portions,
the fault current protection switching element (5) providing an actuation device (13) for transferring the fault current protection switching element (5) from a monitoring switch position, as a first switch state of the fault current protection switching element (5), into an interrupting switch position, as a second switch state of the fault current protection switching element (5), and back, **characterised in that** the actuation device (13) is a mechanical actuation device (13), and **in that**, between the closure element (3) and the mechanical actuation device (13) of the fault current protection switching element (5), an operative connection having a free-running function is established, in such a way that the fault current protection switching element (5) is transferred from the interrupting switch position into the monitoring switch position by transferring the closure element (3) to the open position, without the fault current protection switching element (5) arriving in the interrupting switch position when the closure element (3) is transferred from the open position into the closed position.

2. Supply station according to claim 1, **characterised in that** a rotary lever (9) is provided to establish the operative connection between the closure element (3) and the mechanical actuation device (13) of the fault current protection switching element (5), and/or **in that** the rotary lever (9) is arranged in the housing (1) so as to be inaccessible from the outside.

3. Supply station according to either claim 1 or claim 2, **characterised in that**, when the closure element (3) is provided in the closed position and the fault current protection switching element (5) is provided in the monitoring switch position, the rotary lever (9) is provided spaced apart from the closure element (3).

4. Supply station according to any of claims 1 to 3, **characterised in that** the rotary lever (9) provides an activation portion (12) assigned to the closure element (3) and a trigger portion (11) assigned to the fault current protection switching element (5).

5. Supply station according to claim 4, **characterised in that** the activation portion (12) and the trigger portion (11) are provided on opposite sides of a pivot point (10) of the rotary lever (9).

6. Supply station according to either claim 4 or claim 5, **characterised in that** the trigger portion (11) of the rotary lever (9) provides a connection region (14) and/or in that the connection region (14) encloses the mechanical actuation device (13) of the fault current protection switching element (5) and/or a lever portion (16) of the mechanical actuation device (13) at least in portions.

7. Supply station according to any of claims 1 to 6, **characterised in that** the closure element (3) is provided as a longitudinally displaceable closure element (3) and preferably as a sliding cover.

8. Supply station according to any of claims 1 to 7, **characterised in that** the terminal element (4) is assigned to the opening (2) in such a way that the terminal element (4) is arranged accessibly in the open position of the closure element (3) and inaccessibly in the closed position, and/or **in that** the terminal element (4) is enclosed at least in portions by the housing (1).

9. Supply station according to any of claims 1 to 8, **characterised in that** a fixedly mounted charging cable is provided, the terminal element (4) being provided at a free end of the fixedly mounted charging cable.

10. Supply station according to any of claims 1 to 9, **characterised in that** the fault current protection switching element (5) is arranged in the housing (1) so as to be inaccessible from the outside.

11. Function control method for a supply station according to any of claims 1 to 10, **characterised in that** the fault current protection switching element (5) of the supply station is automatically transferred from a monitoring switch position into an interrupting switch position for routine function checking, and **in that**, when the closure element (3) is next transferred to the open position, the fault current protection switching element (5) is transferred from the interrupting switch position back to the monitoring switch position.

12. Function control method according to claim 11, **characterised in that** the routine function checking is carried out when the closure element (3) is provided in the closed position and/or when a charging process is not being carried out and/or when no electrically operable vehicle is connected to the supply station.

13. Function control method according to either claim 11 or claim 12, **characterised in that** the routine function checking is carried out after a predetermined time interval has passed and/or after a predetermined number of operating hours is reached and/or after a predetermined number of charging processes is reached and/or after a predetermined amount of energy has been provided.

## Revendications

1. Station d'approvisionnement pour la fourniture d'énergie électrique à un véhicule à propulsion électrique, comprenant :
- une ligne d'alimentation électrique
- un élément de raccordement (4) qui peut être raccordé à un réseau d'approvisionnement par l'intermédiaire de la ligne d'alimentation électrique et qui sert au raccordement au véhicule à propulsion électrique,
- un élément de commutation associé à la ligne d'alimentation électrique pour la mise en marche et l'arrêt de l'élément de raccordement (4),
- un disjoncteur de protection contre les courants de défaut (5) qui, comme l'élément de commutation, est associé à la ligne d'alimentation électrique,
- un boîtier (1) qui entoure au moins sur certaines parties la ligne d'alimentation électrique et le disjoncteur de protection contre les courants de défaut (5) et qui présente une ouverture (2),
- un élément de fermeture (3) associé à l'ouverture (2), qui peut être déplacé manuellement d'une position d'ouverture, dans laquelle l'ouverture (2) est libérée, à une position de fermeture, dans laquelle l'ouverture (2) est fermée au moins sur certaines parties,
dans lequel le disjoncteur de protection contre les courants de défaut (5) présente un dispositif d'actionnement (13) pour déplacer le disjoncteur de protection contre les courants de défaut (5) d'une position de commutation de surveillance en tant que premier état de commutation du disjoncteur de protection contre les courants de défaut (5) dans une position de commutation de coupure en tant que deuxième état de commutation du disjoncteur de protection contre les courants de défaut (5) et inversement, **caractérisé en ce que** le dispositif d'actionnement (13) est un dispositif d'actionnement mécanique (13) et qu'une liaison active avec une fonction de roue libre est établie entre l'élément de fermeture (3) et le dispositif d'actionnement mécanique (13) du disjoncteur de protection contre les courants de défaut (5) de telle sorte, que, par un déplacement de l'élément de fermeture (3) dans la position d'ouverture, le disjoncteur de protection contre les courants de défaut (5) peut être déplacé de la position de commutation de coupure dans la position de commutation de surveillance, sans que, lors du déplacement de l'élément de fermeture (3) de la position d'ouverture dans la position de fermeture, le disjoncteur de protection contre les courants de défaut (5) parvienne dans la position de commutation de coupure.

2. Station d'approvisionnement selon la revendication 1, **caractérisée en ce qu'**un levier rotatif (9) est prévu pour établir la liaison active entre l'élément de fermeture (3) et le dispositif d'actionnement mécanique (13) du disjoncteur de protection contre les courants de défaut (5) et/ou **en ce que** le levier rotatif (9) est disposé dans le boîtier (1) de manière à être inaccessible de l'extérieur.

3. Station d'approvisionnement selon la revendication 1 ou 2, **caractérisée en ce que** le levier rotatif (9) est prévu à distance de l'élément de fermeture (3) lorsque l'élément de fermeture (3) est dans la position de fermeture et le disjoncteur de protection contre les courants de défaut (5) dans la position de commutation de surveillance.

4. Station d'approvisionnement selon l'une des revendications 1 à 3, **caractérisée en ce que** le levier rotatif (9) présente une partie d'activation (12) associée à l'élément de fermeture (3) et une partie de déclenchement (11) associée au disjoncteur de protection contre les courants de défaut (5).

5. Station d'approvisionnement selon la revendication 4, **caractérisée en ce que** la partie d'activation (12) et la partie de déclenchement (11) sont prévues sur des côtés opposés d'un centre de rotation (10) du levier rotatif (9).

6. Station d'approvisionnement selon la revendication 4 ou 5, **caractérisée en ce que** la partie de déclenchement (11) du levier rotatif (9) présente une zone de liaison (14) et/ou **en ce que** la zone de liaison (14) entoure au moins sur certaines parties le dispositif d'actionnement mécanique (13) du disjoncteur de protection contre les courants de défaut (5) et/ou une partie levier (16) du dispositif d'actionnement mécanique (13).

7. Station d'approvisionnement selon l'une des revendications 1 à 6, **caractérisée en ce que** l'élément de fermeture (3) est prévu sous la forme d'un élément de fermeture (3) pouvant coulisser longitudinalement et de préférence sous la forme d'un couvercle coulissant.

8. Station d'approvisionnement selon l'une des revendications 1 à 7, **caractérisée en ce que** l'élément de raccordement (4) est associé à l'ouverture (2) de telle sorte que l'élément de raccordement (4) est disposé de manière accessible dans la position d'ouverture de l'élément de fermeture (3) et de manière non accessible dans la position de fermeture et/ou **en ce que** l'élément de raccordement (4) est entouré au moins sur certaines parties par le boîtier (1).

9. Station d'approvisionnement selon l'une des revendications 1 à 8, **caractérisée en ce qu'**il est prévu un câble de recharge monté de manière fixe, l'élément de raccordement (4) étant prévu à une extrémité libre du câble de recharge monté de manière fixe.

10. Station d'approvisionnement selon l'une des revendications 1 à 9, **caractérisée en ce que** le disjoncteur de protection contre les courants de défaut (5) est disposé dans le boîtier (1) de manière à être inaccessible de l'extérieur.

11. Procédé de contrôle fonctionnel d'une station d'approvisionnement selon l'une des revendications 1 à 10, **caractérisé en ce que** le disjoncteur de protection contre les courants de défaut (5) de la station d'approvisionnement est déplacé automatiquement d'une position de commutation de surveillance dans une position de commutation de coupure pour un contrôle fonctionnel de routine et **en ce que**, lors du déplacement suivant de l'élément de fermeture (3) dans la position d'ouverture, le disjoncteur de protection contre les courants de défaut (5) est ramené de la position de commutation de coupure dans la position de commutation de surveillance.

12. Procédé de contrôle fonctionnel selon la revendication 11, **caractérisé en ce que** le contrôle fonctionnel de routine est effectué lorsque l'élément de fermeture (3) est dans la position de fermeture et/ou qu'une opération de recharge n'est pas effectuée et/ou qu'un véhicule à propulsion électrique n'est pas raccordé à la station d'approvisionnement.

13. Procédé de contrôle fonctionnel selon la revendication 11 ou 12, **caractérisé en ce que** le contrôle fonctionnel de routine est effectué après écoulement d'un intervalle de temps prédéfini et/ou après avoir atteint un nombre d'heures de fonctionnement prédéfini et/ou après avoir atteint un nombre d'opérations de recharge prédéfini et/ou après avoir fourni une quantité d'énergie prédéfinie.
